# EUROPÄISCHE PATENTSCHRIFT

(11) **EP 3 501 353 B1**
(45) Veröffentlichungstag und Bekanntmachung des Hinweises auf die Patenterteilung: **06.10.2021**
(21) Anmeldenummer: 18207497.1
(22) Anmeldetag: 21.11.2018
(51) Int. Cl.: A47J 41/00, A47J 43/07

(54) **ZUBEREITUNGSGEFÄSS FÜR EINE KÜCHENMASCHINE**
PREPARATION VESSEL FOR A KITCHEN APPLIANCE
RÉCIPIENT DE PRÉPARATION POUR UNE MACHINE DE CUISINE

(30) Priorität: 12.12.2017 DE 202017107544 U
(43) Veröffentlichungstag der Anmeldung: 26.06.2019
(73) Patentinhaber: Vorwerk & Co. Interholding GmbH, 42275 Wuppertal (DE)
(72) Erfinder: Oti, Benjamin, 42285 Wuppertal (DE)
(74) Vertreter: Müller, Enno

(56) Entgegenhaltungen:
- EP-A1- 3 158 904
- DE-A1-102010 043 864
- DE-A1-102014 113 552
- US-A- 4 173 925
- US-A- 5 360 176
- US-A1- 2014 134 305
- US-A1- 2016 220 071
- Anonymous: "Aerogel - Wikipedia", , 1. Dezember 2018 (2018-12-01), XP055571471, Gefunden im Internet: URL:https://de.wikipedia.org/wiki/Aerogel# Wärmedämmung [gefunden am 2019-03-19]
- Anonymous: "Vakuum - Wikipedia", , 11. Februar 2019 (2019-02-11), XP055571505, Gefunden im Internet: URL:https://de.wikipedia.org/wiki/Vakuum [gefunden am 2019-03-19]

## Beschreibung

### Gebiet der Technik

Die Erfindung betrifft ein Zubereitungsgefäß, nämlich Rührgefäß, mit einem Zubereitungsraum zur Aufnahme von Speisen für eine Küchenmaschine, wobei das Zubereitungsgefäß eine Gefäßwandung aufweist, welche die Umfangsfläche des Zubereitungsgefäßes sowie auch dessen Gefäßboden umfasst und zumindest in einem Teilbereich doppelwandig mit einer den Zubereitungsraum des Zubereitungsgefäßes begrenzenden Innenwandung und einer separat dazu ausgebildeten, durch einen Zwischenraum von der Innenwandung beabstandeten Außenwandung ausgebildet ist, wobei die Innenwandung und die Außenwandung untrennbar miteinander verbundene Teile der Gefäßwandung sind.

Des Weiteren betrifft die Erfindung eine Küchenmaschine mit einem Basisgerät und einem mit dem Basisgerät verbindbaren Zubereitungsgefäß, welches nach der zuvor beschriebenen Art ausgebildet ist.

### Stand der Technik

Zubereitungsgefäße sowie Küchenmaschinen mit solchen Zubereitungsgefäßen sind im Stand der Technik bekannt.

Die Druckschriften DE 10 2014112 959 A1 und DE 10 2014 113 552 A1 offenbaren beispielsweise als kombinierte Koch-Mix-Geräte ausgebildete Küchenmaschinen. Die Küchenmaschine weist ein Basisgerät auf, mit welchem ein Zubereitungsgefäß verbindbar ist. Das Zubereitungsgefäß ist beispielsweise ein Rührgefäß, welches in einem Bodenbereich ein Rührwerk aufweist, das mittels eines in dem Basisgerät angeordneten Elektromotors rotierbar ist. Eine Gefäßwandung des Zubereitungsgefäßes, beispielsweise ein Gefäßboden, weist eine Heizeinrichtung auf. Diese ist üblicherweise als Dickschichtheizung ausgebildet und in das Material des Gefäßbodens eingebettet. Mit dem Rührgefäß ist ein weiteres Zubereitungsgefäß verbunden, dieses ist in den vorgenannten Veröffentlichungen als Garaufsatz ausgebildet. Der Garaufsatz weist eine oder mehrere Bodenöffnungen auf, durch welche aus dem Rührgefäß austretender Dampf in den Garaufsatz eintreten und Kondensat aus dem Garaufsatz in das Rührgefäß fließen kann.

Es ist zudem beschrieben, dass eine Garaufsatzwandung eine Heizeinrichtung aufweist, die ein schnelleres und gleichmäßigeres Garen erlaubt und/ oder nach der Zubereitung ein Warmhalten von Speisen sicherstellt. Des Weiteren ist es bekannt, die Garaufsatzwandung zumindest partiell doppelwandig auszubilden. Die beiden Wandungen, d. h. die Innenwandung und die Außenwandung, sind durch einen Zwischenraum voneinander beabstandet, welcher beispielsweise mit Luft gefüllt ist.

Es sind des Weiteren aus der US 4 173 925 A und US 2014/0134305 A1 Küchenmaschinen bekannt, die ein äußeres Aufnahmegehäuse für die Aufnahme eines Zubereitungsgefäßes aufweisen. Das äußere Gehäuse beinhaltet eine elektrische Heizeinrichtung.

Die EP 3 158 904 A1 offenbart ein aus zwei einzelnen Behältnissen zusammengesetztes Zubereitungsgefäß für eine Küchenmaschine, wobei zwischen den Behältnissen ein flüssiger Wärmeleiter, beispielsweise Wasser, eingesetzt werden kann. Die DE 10 2010 043864 A1 offenbart ein Rührgefäß mit untrennbar verbundener Innen- und Außenwandung sowie mit einer Heizeinrichtung im Zwischenraum.

### Zusammenfassung der Erfindung

Ausgehend von dem vorgenannten Stand der Technik ist es Aufgabe der Erfindung, Zubereitungsgefäße für Küchenmaschinen so weiterzubilden, dass in dem Zubereitungsraum befindliche Speisen optimal, vorzugsweise homogen, geheizt und/oder warmgehalten werden können, gleichzeitig jedoch eine optimale Isolation nach außen sichergestellt ist, so dass ein Nutzer bei Berührung der Außenwand keine Hitzeeinwirkung erfährt.

Zur Lösung der vorgenannten Aufgabe wird vorgeschlagen, dass in dem Zwischenraum eine die Innenwandung wärmeleitend kontaktierende Heizeinrichtung und eine Kühleinrichtung angeordnet sind, wobei die Gefäßwandung sowohl in einem Umfangsbereich als auch dem Gefäßboden die Heizeinrichtung und die Kühleinrichtung aufweist. Als Heizeinrichtung kann beispielsweise eine Dickschichtheizung, ein Peltierelement, ein Heizwiderstand oder anderes verwendet werden. Als Kühleinrichtung kann beispielsweise ein Peltierelement, ein Strömungskanal für Kaltwasser oder ähnliches vorgesehen sein. Der Zwischenraum kann neben der hier vorgeschlagenen Heizeinrichtung und Kühleinrichtung des Weiteren auch ein Vakuum mit einem Gasdruck von weniger als 300 mbar aufweisen und/oder ein Isolationsmaterial mit einer Wärmeleitfähigkeit von weniger als 0,02 W/(mK) aufweisen. Der Zwischenraum wird gemäß dieser Ausführung jedoch nicht nur zur Wärmedämmung genutzt, sondern auch zur Einbringung von Wärmeenergie in den Zubereitungsraum und damit in das in dem Zubereitungsgefäß befindliche Zubereitungsgut. Dazu ist die Innenwandung der Gefäßwandung vorzugsweise wärmeleitend ausgebildet, so dass die Wärme an den Zubereitungsraum abgegeben werden kann. Die Heizeinrichtung kontaktiert die Innenwandung wärmeleitend. Ebenso ist zusätzlich auch eine Kühleinrichtung innerhalb des Zwischenraums vorgesehen. Die Kühleinrichtung kontaktiert die Innenwandung beispielsweise ebenfalls wärmeleitend, so dass nach Wahl auch Wärmeenergie von dem Zubereitungsraum bzw. darin befindlichen Lebensmitteln oder Speisen an die Kühleinrichtung abgegeben werden kann. Dadurch werden innerhalb des Zubereitungsraumes befindliche Lebensmittel und Speisen gekühlt. Diese Funktion ist vorteilhaft, wenn beispielsweise Sahne geschlagen werden soll, Eiscreme oder Mousse zubereitet werden sollen und dergleichen. Im Gegensatz zum Stand der Technik ist es nicht mehr erforderlich, dass ein Nutzer das Zubereitungsgefäß vor der Zubereitung derartiger Lebensmittel für eine gewisse Zeit in einen Kühlschrank oder ein Eisfach stellt. Durch die Kühleinrichtung kann des Weiteren erreicht werden, dass trotz eines innerhalb des Zubereitungsraumes befindlichen heißen Lebensmittels die Außenwandung der Gefäßwandung kühl bleibt, so dass der Nutzer das Zubereitungsgefäß von außen anfassen kann. Bei dieser Ausgestaltung kann es beispielsweise auch vorgesehen sein, dass die Kühleinrichtung nur der Außenwandung des Zwischenraumes zugeordnet ist, so dass die Kühleinrichtung nicht gleichzeitig auch ein Abkühlen einer heißen Speise bewirkt, die sich innerhalb des Zubereitungsraumes befindet. Je nach der gewünschten Funktion des Zubereitungsgefäßes bzw. der Küchenmaschine kann die Kühleinrichtung innerhalb des Zwischenraumes auch so angeordnet und ausgebildet sein, dass sich diese entweder zu der Innenwandung oder der Außenwandung verlagern lässt, so dass entweder die Innenwandung oder die Außenwandung gekühlt wird. Damit steht entweder die Funktion im Vordergrund, den Zubereitungsraum des Zubereitungsgefäßes zu kühlen, oder die Außenwandung kühl zu halten.

Es wird vorgeschlagen, dass die Heizeinrichtung und/oder Kühleinrichtung gegenüber der Außenwandung wärmeisoliert ist. Die Wärmeisolation kann entweder durch die Ausbildung eines Vakuums zwischen der Heizeinrichtung bzw. der Kühleinrichtung und der Außenwandung erreicht werden, oder durch das Einbringen eines zuvor erwähnten Isolationsmaterials. Somit gelangt die von der Heizeinrichtung erzeugte Wärme bzw. die von der Kühleinrichtung erzeugte Kälte nicht an die Außenwandung, so dass die Gefäßwandung des Zubereitungsgefäßes immer vorzugsweise Umgebungstemperatur aufweist.

Es kann vorgesehen sein, dass der Zwischenraum zwischen der Außenwandung und der Heizeinrichtung und/ oder Kühleinrichtung ein Vakuum mit einem Gasdruck von weniger als 300 mbar aufweist und/oder ein Isolationsmaterial mit einer Wärmeleitfähigkeit von weniger als 0,02 W/ (mK) aufweist. Von innen nach außen betrachtet weist die Gefäßwandung des Zubereitungsgefäßes somit zunächst die Innenwandung auf, dann eine mit der Innenwandung wärmeleitend in Kontakt stehende Heizeinrichtung bzw. Kühleinrichtung und dann entweder ein Vakuum mit dem vorgenannten Gasdruck, oder ein entsprechendes Isolationsmaterial. Daran schließt sich dann ohne Kontakt zu der Heizeinrichtung bzw. Kühleinrichtung die Außenwandung der Gefäßwandung an.

Es wird vorgeschlagen, dass das Zubereitungsgefäß ein mit einem Basisgerät einer Küchenmaschine verbindbares Zubereitungsgefäß ist, welches elektrische Anschlüsse zum Anschluss an eine Energieversorgung des Basisgerätes aufweist. Bei dieser Ausgestaltung bezieht das Zubereitungsgefäß, insbesondere eine Heizeinrichtung und/oder Kühleinrichtung, jedoch auch beispielsweise Sensoren oder andere Verbraucher, Energie über das Basisgerät der Küchenmaschine. Die elektrischen Anschlüsse können beispielsweise Kontaktstifte an einem Gefäßboden oder einem anderen Teilbereich einer Gefäßwandung des Zubereitungsgefäßes beinhalten, welche mit korrespondierenden Buchsen des Basisgerätes verbindbar sind. Das Zubereitungsgefäß kann des Weiteren auch einen Gefäßboden mit einer Bodenöffnung aufweisen, durch welche ein Rührwerk in den Zubereitungsraum führbar ist. Das Rührwerk kann mittels eines in dem Basisgerät befindlichen Elektromotors betrieben werden.

Des Weiteren wird vorgeschlagen, dass ein Gefäßboden des Zubereitungsgefäßes eine Heizeinrichtung und/oder Kühleinrichtung aufweist. Gemäß dieser Ausgestaltung kann das Zubereitungsgefäß entweder nur in dem Gefäßboden eine Heizeinrichtung und/oder Kühleinrichtung aufweisen, oder zusätzlich, wie zuvor bereits vorgeschlagen, auch im Bereich einer Umfangswandung des Zubereitungsgefäßes. Es ist ebenfalls möglich, nur einzelne Teilbereiche der Umfangswandung und/oder des Gefäßbodens mit einer Heiz- und/oder Kühlfunktion auszustatten. Die Heizeinrichtung bzw. Kühleinrichtung kann in einzelne Heiz- bzw. Kühlsegmente unterteilt sein oder einteilig die gesamte Gefäßwandung durchziehen.

Schließlich wird neben dem zuvor beschriebenen Zubereitungsgefäß auch eine Küchenmaschine mit einem Basisgerät und einem mit dem Basisgerät verbindbaren Zubereitungsgefäß vorgeschlagen, wobei das Zubereitungsgefäß nach einer oder mehreren der zuvor vorgeschlagenen Ausführungsformen ausgebildet ist. Die Küchenmaschine kann beispielsweise ein kombiniertes Koch-Mix-Gerät sein, an dessen Basisgerät ein Zubereitungsgefäß angeordnet werden kann. Das Basisgerät der Küchenmaschine kann insbesondere die Energieversorgung für die Heizeinrichtung und/oder die Kühleinrichtung des Zubereitungsgefäßes zur Verfügung stellen, oder auch Energie für Sensoren, einen Elektromotor zum Antrieb eines Rührwerks und dergleichen.

### Kurze Beschreibung der Zeichnungen

Im Folgenden wird die Erfindung anhand von Ausführungsbeispielen näher erläutert. Es zeigen:
Fig. 1 eine erfindungsgemäße Küchenmaschine mit einem Zubereitungsgefäß,
Fig. 2 einen Längsschnitt durch die Küchenmaschine gemäß Figur 1,
Fig. 3 ein nicht erfindungsgemäßes Zubereitungsgefäß gemäß einer ersten Ausführungsform,
Fig. 4 ein nicht erfindungsgemäßes Zubereitungsgefäß gemäß einer zweiten Ausführungsform,
Fig. 5 ein erfindungsgemäßes Zubereitungsgefäß

### Beschreibung der Ausführungsformen

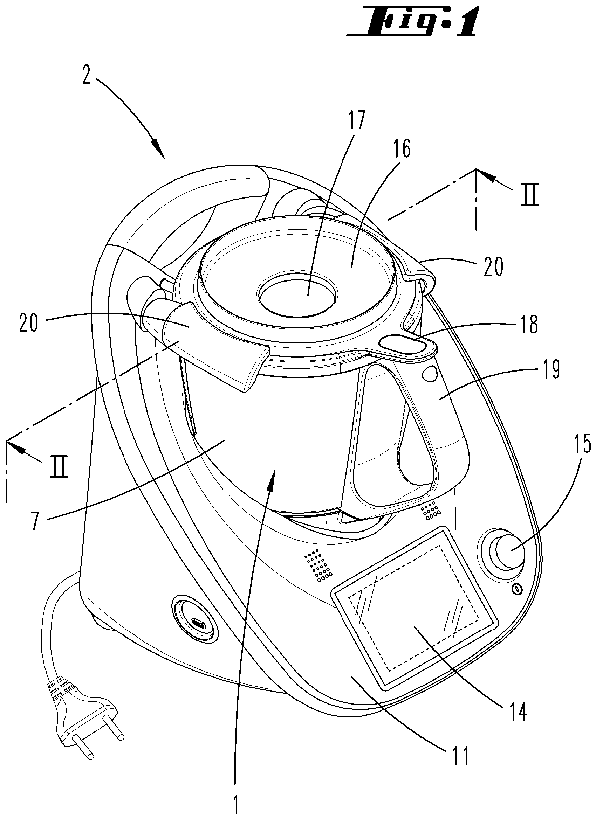

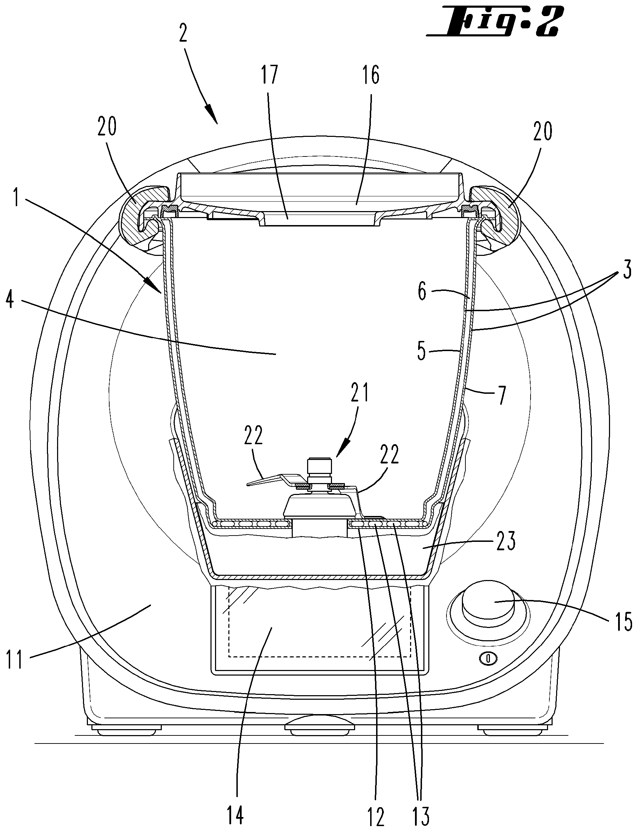

Figur 1 zeigt lediglich beispielhaft eine elektromotorisch betriebene Küchenmaschine 2, welche hier als kombiniertes Koch-Mix-Gerät ausgebildet ist. Die Küchenmaschine 2 weist beispielsweise ein Basisgerät 11 zur lösbaren Aufnahme eines Zubereitungsgefäßes 1 auf. Das Zubereitungsgefäß 1 verfügt hier an einem Gefäßboden 12 (siehe Figur 2) über eine Bodenöffnung, durch welche ein Teil eines Rührwerks 21 hindurchgeführt werden kann, das mit einer Motorwelle eines Elektromotors der Küchenmaschine 2 verbunden ist. Das Zubereitungsgefäß 1 weist des Weiteren einen Gefäßgriff 19 und einen Deckel 16 mit einem Deckelgriff 18 und einer Deckelöffnung 17 auf. Durch die Deckelöffnung 17 können während des Betriebs der Küchenmaschine 2 beispielsweise Zutaten in das Zubereitungsgefäß 1 gegeben werden. An dem Basisgerät 11 sind des Weiteren ein Display 14, hier beispielsweise ein Touchscreen, sowie ein Schalter 15 angeordnet, über welche eine Menüführung der Küchenmaschine 2 gesteuert werden kann, beispielsweise um die Zubereitung von Speisen anhand eines ausgewählten Rezeptes zu steuern. Auf dem Display 14 können dem Nutzer beispielsweise einzelne Abarbeitungsschritte einer automatischen Rezeptzubereitung angezeigt werden, sowie benötigte Zutaten für die Zubereitung, die der Nutzer in das Zubereitungsgefäß 1 einzufüllen hat. Mittels des Schalters 15 kann der Nutzer beispielsweise eine Eingabe bestätigen, einzelne Abarbeitungsschritte starten und dergleichen. Der Deckel 16 des Zubereitungsgefäßes 1 wird mit Hilfe von zwei Verriegelungswalzen 20 an dem Zubereitungsgefäß 1 fixiert, so dass es bei einem Betrieb der Küchenmaschine 2 nicht zu einem ungewünschten Öffnen des Zubereitungsgefäßes 1 kommen kann.

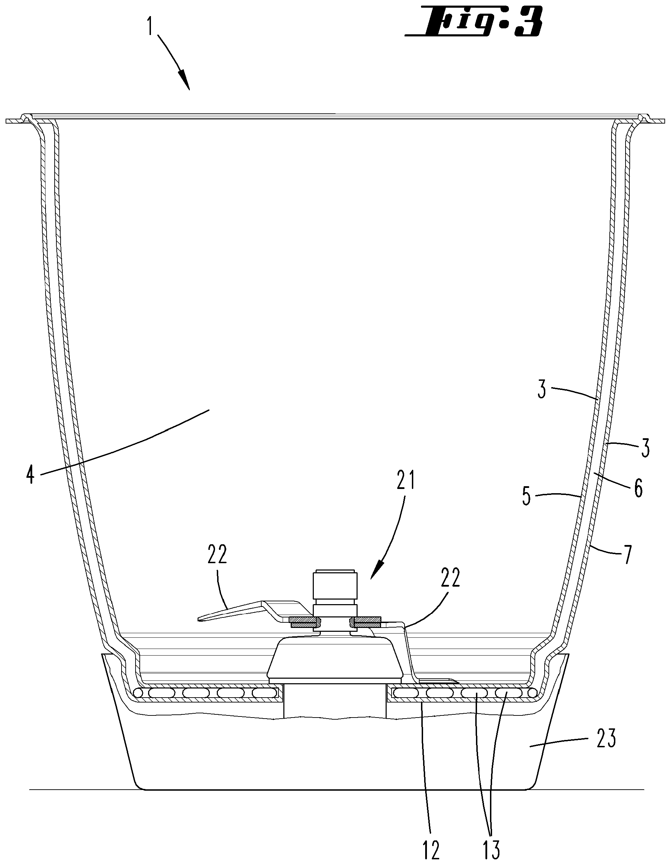

Figur 2 zeigt die Küchenmaschine 2 mit einem längsgeschnittenen Zubereitungsgefäß 1 gemäß einer nicht erfindungsgemäßen Ausführungsform. Das Zubereitungsgefäß 1 ist vergrößert ebenfalls in Figur 3 dargestellt. Das Basisgerät 11 der Küchenmaschine 2 weist einen Gefäßaufnahmebereich auf, mit welchem das Zubereitungsgefäß 1 lösbar verbunden ist. Der Gefäßaufnahmebereich ist hier beispielsweise als Vertiefung geformt, in welche das Zubereitungsgefäß 1 eingesetzt werden kann. Der Gefäßaufnahmebereich kann elektrische Kontakte aufweisen, welche eine Energieversorgung für elektrische Verbraucher des Zubereitungsgefäßes 1 bereitstellen. Zu diesem Zweck kann an dem Gefäßaufnahmebereich beispielsweise eine Leiste mit Kontakten ausgebildet sein, mit welchen korrespondierende elektrische Kontakte des Zubereitungsgefäßes 1 verbunden werden können. Das Zubereitungsgefäß 1 weist hier einen Gefäßfußteil 23 auf, welcher eine Standfläche für das Zubereitungsgefäß 1 bildet. Mit diesem Gefäßfußteil 23 ist das Zubereitungsgefäß 1, vorzugweise lösbar, verbunden. Der Gefäßfußteil 23 kann beispielsweise zur Fixierung des Rührwerks 21 an dem Gefäßboden 12 des Zubereitungsgefäßes 1 dienen. Das Rührwerk 21 ist hier als Messersatz mit einer Mehrzahl von Messern 22 ausgebildet. In dem Gefäßboden 12 befindet sich des Weiteren eine Heizeinrichtung 13. Die Heizeinrichtung 13 ist hier beispielsweise als Dickschichtheizung in das Material des Gefäßbodens 12 integriert und wird über die Energieversorgung des Basisgerätes 11 der Küchenmaschine 2 mit elektrischer Energie versorgt.

Das Zubereitungsgefäß 1 verfügt über eine Gefäßwandung 3, welche die Umfangsfläche des Zubereitungsgefäßes 1 sowie auch dessen Gefäßboden 12 umfasst. Die Gefäßwandung 3 ist hier doppelwandig ausgebildet, mit einer Innenwandung 5 und einer von der Innenwandung 5 beabstandeten Außenwandung 7. Die Innenwandung 5 und die Außenwandung 7 sind durch einen Zwischenraum 6 getrennt. Der Zwischenraum 6 ist mit einem Unterdruck von hier beispielsweise 200 mbar beaufschlagt. Dies betrifft den gesamten Zwischenraum 6 der Gefäßwandung 3, außer hier beispielsweise den Bereich des Gefäßbodens 12, in welchem die Heizeinrichtung 13 angeordnet ist.

Das in dem Zwischenraum 6 ausgebildete Vakuum dient zur Wärmeisolation eines Zubereitungsraumes 4 des Zubereitungsgefäßes 1 gegenüber der Umgebung. Das Vakuum unterbricht eine gegebenenfalls ansonsten wärmeleitende Verbindung zwischen der Innenwandung 5 und der Außenwandung 7. Dadurch, dass die Wandungen 5, 7 durch das Vakuum thermisch entkoppelt sind, kühlt eine in dem Zubereitungsraum 4 befindliche Speise weniger schnell ab bzw. kann dessen Wärmeenergie nicht an die Außenwandung 7 des Zubereitungsgefäßes 1 abgeben werden. Trotz des heißen Zubereitungsgutes innerhalb des Zubereitungsraums 4 bleibt die Außenwandung 7 kalt und kann ein Nutzer sich auch bei hohen Temperaturen nicht verbrennen, falls er das Zubereitungsgefäß 1 an der Außenwandung 7 anfasst. Vorzugsweise ist die Innenwandung 5 aus einem wärmeleitenden Material hergestellt, beispielsweise einem Metall, so dass der Zubereitungsraum 4 und darin befindliches Zubereitungsgut möglichst gleichmäßig erwärmt und warmgehalten werden kann. Das Zubereitungsgut kann eine Temperatur somit über einen gegenüber dem Stand der Technik längeren Zeitraum beibehalten, da kein Temperaturausgleich mit der Umgebung des Zubereitungsgefäßes 1 erfolgt.

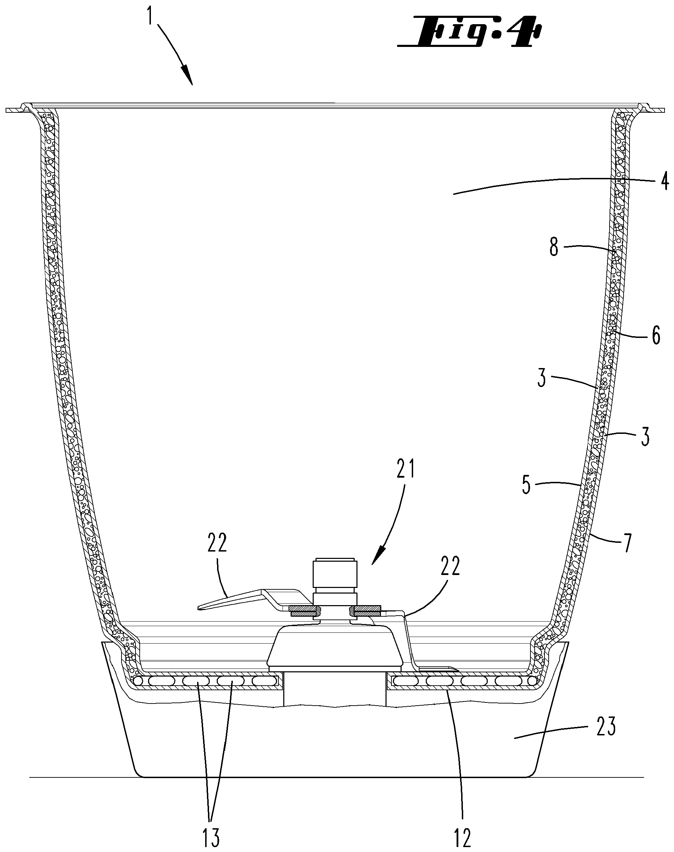

Figur 4 zeigt eine weitere mögliche Ausführungsform eines nicht erfindungsgemäßen Zubereitungsgefäßes 1. Bei diesem Beispiel weist die doppelwandige Gefäßwandung 3 des Zubereitungsgefäßes 1 bezogen auf die Umfangswandung ein Isolationsmaterial 8 auf, welches eine Wärmeleitfähigkeit aufweist, die geringer ist als die von Luft. Hier weist das Isolationsmaterial 8 beispielsweise eine Wärmeleitfähigkeit von weniger als 0,02 W/ (mK) auf. Beispielsweise besteht das Isolationsmaterial 8 aus einem offenporigen Polymerschaum oder einem Aerogel. Des Weiteren sind auch andere Materialien möglich, beispielsweise Kieselsäure, Glasfasern, andere Kunststoff-Isolationsmaterialien und dergleichen. Zusätzlich zu dem Isolationsmaterial 8 kann vorgesehen sein, dass in materialfreien Teilbereichen des Zwischenraumes 6 zusätzlich ein Vakuum angelegt wird, so dass beispielsweise die offenen Poren des Polymerschaums evakuiert werden. Dadurch kann eine insgesamt geringe Wärmeleitfähigkeit des Zwischenraums 6 erreicht werden.

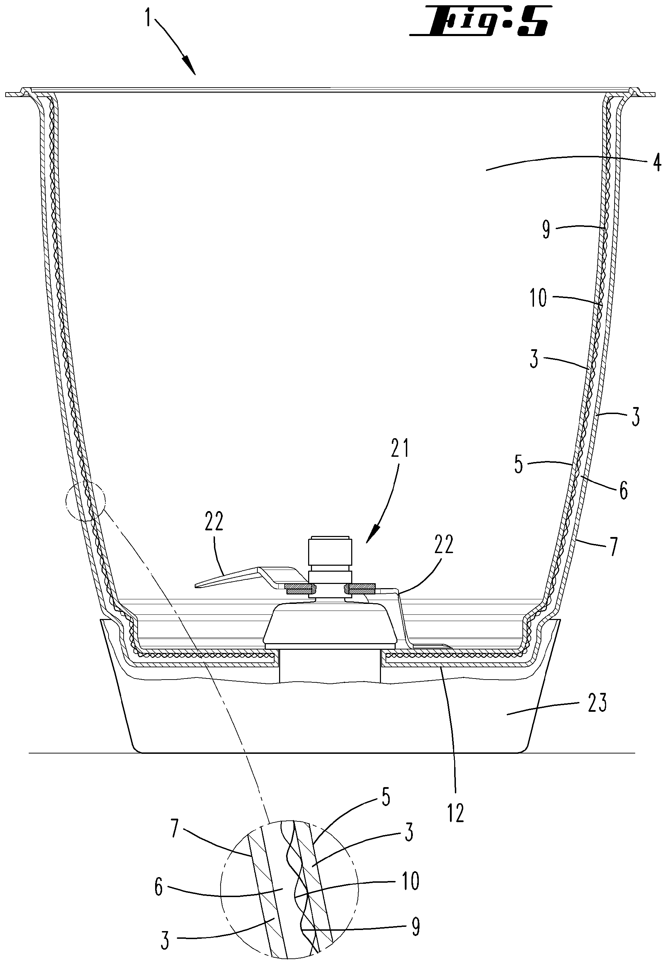

Figur 5 zeigt schließlich eine Ausführungsform eines erfindungsgemäßen Zubereitungsgefäßes 1. Die Gefäßwandung 3 weist hier sowohl in einem Umfangsbereich als auch dem Gefäßboden 12 eine Heizeinrichtung 9 und eine Kühleinrichtung 10 auf. Die Heizeinrichtung 9 kann beispielsweise durch einen Widerstandsdraht, Peltierelemente oder ähnliches gebildet sein. Die Kühleinrichtung 10 kann beispielsweise ein Kanalsystem für Kühlflüssigkeit, Peltierelemente oder ähnliches aufweisen. Die gewundene Form der Heizeinrichtung 9 und der Kühleinrichtung 10, welche in Figur 5 gezeigt ist, ist lediglich beispielhaft gewählt. Dies beschränkt nicht die Art und Weise der Ausbildung von Heizeinrichtung 9 und Kühleinrichtung 10. Vorteilhaft sind sowohl die Heizeinrichtung 9, als auch die Kühleinrichtung 10 in Kontakt mit der Innenwandung 5, so dass die Wärmeenergie bzw. Kälte über die vorzugsweise wärmeleitende Innenwandung 5 an den Zubereitungsraum 4 bzw. ein darin befindliches Zubereitungsgut abgegeben werden kann. Auf der gegenüberliegenden Seite der Gefäßwandung 3 sind die Heizeinrichtung 9 und die Kühleinrichtung 10 jedoch von der Außenwandung 7 beabstandet und stehen nicht in wärmeleitendem Kontakt mit dieser. Besonders bevorzugt befindet sich in dem Zwischenraum 6 zwischen der Heizeinrichtung 9 bzw. der Kühleinrichtung 10 und der Außenwandung 7 ein Vakuum oder ein Isolationsmaterial 8.

Die entlang der gesamten Gefäßwandung 3 ausgebildete Heizeinrichtung 9 ermöglicht, dass der Zubereitungsraum 4 nicht nur über den Gefäßboden 12 geheizt wird, sondern über einen vollumfänglichen Flächenbereich, so dass das Zubereitungsgut gleichmäßiger und schonender erwärmt werden kann und ein nährstoffschonendes Kochen gewährleistet ist. Durch die Kühleinrichtung 10 sind neben der Zubereitung von heißen Gerichten auch Zubereitungen kalter Gerichte möglich. Es ist nicht mehr notwendig, das Zubereitungsgefäß 1 beispielsweise vor einem Schlagen von Sahne, Zubereitung von Eis oder Mousse in einen Kühlschrank zu stellen. Das Zubereitungsgefäß 1 bzw. dessen Zubereitungsraum 4 bleibt stets kalt, aufgrund der thermischen Entkopplung von der Außenwandung 7 spürt ein Nutzer an der Außenseite der Außenwandung 7 jedoch keine Kälteeinwirkung.

Eine weitere Ausführungsform, die der Ausführungsform gemäß Figur 5 ähnelt, kann auch vorsehen, dass die Heizeinrichtung 9 in Kontakt mit der Innenwandung 5 steht, während die Kühleinrichtung 10 in Kontakt mit der Außenwandung 7 steht. Bei Betrieb der Heizeinrichtung 9 kann gegebenenfalls zu der Außenwandung 7 gelangende Wärme durch die Kühleinrichtung 10 beseitigt werden.

Neben den gezeigten beispielhaften Ausführungsformen sind selbstverständlich auch andere Kombinationen von Vakuum, Isolationsmaterial 8, Heizeinrichtung 9 und Kühleinrichtung 10 möglich.

### Liste der Bezugszeichen

- 1: Zubereitungsgefäß
- 2: Küchenmaschine
- 3: Gefäßwandung
- 4: Zubereitungsraum
- 5: Innenwandung
- 6: Zwischenraum
- 7: Außenwandung
- 8: Isolationsmaterial
- 9: Heizeinrichtung
- 10: Kühleinrichtung
- 11: Basisgerät
- 12: Gefäßboden
- 13: Heizeinrichtung
- 14: Display
- 15: Schalter
- 16: Deckel
- 17: Deckelöffnung
- 18: Deckelgriff
- 19: Gefäßgriff
- 20: Verriegelungswalze
- 21: Rührwerk
- 22: Messer
- 23: Gefäßfußteil

## Patentansprüche

1. Zubereitungsgefäß (1), nämlich Rührgefäß, zur Aufnahme von Speisen, mit einem Zubereitungsraum (4) für eine Küchenmaschine (2), wobei das Zubereitungsgefäß (1) eine Gefäßwandung (3) aufweist, welche die Umfangsfläche des Zubereitungsgefäßes (1) sowie auch dessen Gefäßboden (12) umfasst und zumindest in einem Teilbereich doppelwandig mit einer den Zubereitungsraum (4) des Zubereitungsgefäßes (1) begrenzenden Innenwandung (5) und einer separat dazu ausgebildeten, durch einen Zwischenraum (6) von der Innenwandung (5) beabstandeten Außenwandung (7) ausgebildet ist, wobei die Innenwandung (5) und die Außenwandung (7) untrennbar miteinander verbundene Teile der Gefäßwandung (3) sind, **dadurch gekennzeichnet, dass** in dem Zwischenraum (6) eine die Innenwandung (5) wärmeleitend kontaktierende Heizeinrichtung (9) und eine Kühleinrichtung (10) angeordnet sind, wobei die Gefäßwandung (3) sowohl in einem Umfangsbereich als auch dem Gefäßboden (12) die Heizeinrichtung (9) und die Kühleinrichtung (10) aufweist.

2. Zubereitungsgefäß (1) nach Anspruch 1, **dadurch gekennzeichnet, dass** die Heizeinrichtung (9) und/oder Kühleinrichtung (10) gegenüber der Außenwandung (7) wärmeisoliert ist.

3. Zubereitungsgefäß (1) nach Anspruch 1 oder 2, **dadurch gekennzeichnet, dass** der Zwischenraum (6) zwischen der Außenwandung (7) und der Heizeinrichtung (9) und/oder Kühleinrichtung (10) ein Vakuum mit einem Gasdruck von weniger als 300 mbar aufweist und/oder ein Isolationsmaterial (8) mit einer Wärmeleitfähigkeit von weniger als 0,02 W/ (mK) aufweist.

4. Zubereitungsgefäß (1) nach einem der vorhergehenden Ansprüche, **dadurch gekennzeichnet, dass** das Zubereitungsgefäß (1) ein mit einem Basisgerät (11) einer Küchenmaschine (2) verbindbares Zubereitungsgefäß (1) ist, welches elektrische Anschlüsse zum Anschluss an eine Energieversorgung des Basisgerätes (11) aufweist.

5. Küchenmaschine (2) mit einem Basisgerät (11) und einem mit dem Basisgerät (11) verbindbaren Zubereitungsgefäß (1), **dadurch gekennzeichnet, dass** das Zubereitungsgefäß (1) nach einem der vorhergehenden Ansprüche ausgebildet ist.

## Claims

1. A preparation vessel (1), in particular a mixing vessel, for receiving food, with a preparation chamber (4) for a kitchen machine (2) wherein the preparation vessel (1) has a vessel wall (3), which comprises the peripheral surface as well as the vessel bottom of the preparation vessel (1)and at least a partial area of which has a double-wall configuration, with an inner wall (5) that borders a preparation chamber (4) of the preparation vessel (1) and an outer wall (7) designed separately from the latter and spaced apart from the inner wall (5) by an intermediate space (6), wherein the inner wall (5) and the outer wall (7) are parts of the vessel wall (3) which are inseparably connected to each other, **characterized in that** the intermediate space (6) accommodates a heating device (9)that contacts the inner wall (5)in a heat conducting manner, and a cooling device, wherein the vessel wall (3) has the heating device (9) and the cooling device (10) in the peripheral surface as well as in the vessel bottom (12).

2. The preparation vessel (1) according to claim 1, **characterized in that** the heating device (9) and/or cooling device (10) is thermally insulated relative to the outer wall (7).

3. The preparation vessel (1) according to claim 1 or 2, **characterized in that** the intermediate space (6) between the outer wall (7) and the heating device (9) and/or cooling device (10) has a vacuum with a gas pressure of less than 300 mbar and/or an insulating material (8) with a thermal conductivity of less than 0.02 W/(mK).

4. The preparation vessel (1) according to one of the preceding claims, **characterized in that** the preparation vessel (1) is a preparation vessel (1) that can be connected with a base unit (11) of a food processor (2), and has electrical connections for connection to a power supply of the base unit (11).

5. A food processor (2) with a base unit (11) and a preparation vessel (1) that can be connected with the base unit (11), **characterized in that** the preparation vessel is designed according to one of the preceding claims.

## Revendications

1. Récipient de préparation (1), à savoir récipient d'agitation, pour recevoir des aliments, avec un espace de préparation (4) pour un robot de cuisine (2), dans lequel le récipient de préparation (1) présente une paroi de récipient (3) qui comprend la surface périphérique du récipient de préparation (1) ainsi que son fond de récipient (12) et qui est à double paroi au moins dans une région partielle, avec une paroi intérieure (5) délimitant l'espace de préparation (4) du récipient de préparation (1) et une paroi extérieure (7) formée séparément de celle-ci et espacée de la paroi intérieure (5) par un espace intermédiaire (6), la paroi intérieure (5) et la paroi extérieure (7) étant des parties de la paroi du récipient (3) qui sont reliées l'une à l'autre de manière inséparable, **caractérisé en ce qu'**un dispositif de chauffage (9) en contact thermoconducteur avec la paroi intérieure (5) et un dispositif de refroidissement (10) sont agencés dans l'espace intermédiaire (6), la paroi du récipient (3) présentant le dispositif de chauffage (9) et le dispositif de refroidissement (10) aussi bien dans une région périphérique que dans le fond du récipient (12).

2. Récipient de préparation (1) selon la revendication 1, **caractérisé en ce que** le dispositif de chauffage (9) et/ou le dispositif de refroidissement (10) est isolé thermiquement de la paroi extérieure (7).

3. Récipient de préparation (1) selon la revendication 1 ou 2, **caractérisé en ce que** l'espace intermédiaire (6) entre la paroi extérieure (7) et le dispositif de chauffage (9) et/ou le dispositif de refroidissement (10) présente un vide avec une pression de gaz inférieure à 300 mbar et/ou présente un matériau isolant (8) avec une conductivité thermique inférieure à 0,02 W/(mK).

4. Récipient de préparation (1) selon l'une des revendications précédentes, **caractérisé en ce que** le récipient de préparation (1) est un récipient de préparation (1) qui peut être relié à un appareil de base (11) d'un robot culinaire (2) et qui présente des connexions électriques pour la connexion à une alimentation électrique de l'appareil de base (11).

5. Robot culinaire (2) comprenant un appareil de base (11) et un récipient de préparation (1) pouvant être relié à l'appareil de base (11), **caractérisé en ce que** le récipient de préparation (1) est formé selon l'une des revendications précédentes.
